# EUROPEAN PATENT SPECIFICATION

(11) **EP 0 640 057 B1**
(45) Date of publication and mention of the grant of the patent: **09.12.1998**
(21) Application number: 93910499.8
(22) Date of filing: 16.04.1993
(51) Int. Cl.: B65H 3/28, B65G 59/02, B21D 43/24

(54) **METHOD AND APPARATUS FOR DESTACKING SHEET METAL MEMBERS**
VERFAHREN UND VORRICHTUNG ZUM ENTSTAPELN VON BLECHEN
PROCEDE ET APPAREIL POUR SEPARER DES PLAQUES METALLIQUES D'UN EMPILEMENT

(30) Priority: 13.05.1992 SE 9201507
(43) Date of publication of application: 01.03.1995
(73) Proprietor: AB VOLVO, 405 08 Göteborg (SE)
(72) Inventor: OLOFSSON, Bengt, S-293 41 Olofström (SE); OLSSON, Jimmy, S-293 33 Olofström (SE); REMEN, Milan, S-293 37 Olofström (SE); GULLBERG, Kenneth, S-360 10 Ryd (SE)
(74) Representative: Wallengren, Yngvar
(86) International application number: PCT/SE93/00333
(87) International publication number: WO 93/23321

(56) References cited:
- DE-A- 2 445 986
- DE-C- 258 382
- DE-C- 372 401
- FR-A- 799 182
- FR-A- 2 477 120
- NO-C- 76 643
- US-A- 4 447 053
- US-A- 4 511 134
- US-A- 4 595 188
- DATABASE WPI Week 9226, Derwent Publications Ltd., London, GB; AN 92-215058/26 & SU-A-1 680 417 (STAROKRAMA MECH ENG WKS) 30 September 1991
- DATABASE WPI Week 8231, Derwent Publications Ltd., London, GB; AN K3824 E/31 & SU-B-870 322 (SMIRNOV) 17 October 1981
- PATENT ABSTRACTS OF JAPAN vol. 12, no. 218 (M-711) & JP-A-63 017 741 (ELECTROPLATING ENG OF JAPAN CO) 25 January 1988

## Description

### TECHNICAL FIELD

The present invention relates to a method of destacking, or separating, from one another sheet or panel-shaped, substantially planar objects such as sheet metal members which form a stack, the separation being effected in a separation direction which is substantially parallel with a normal to the plane of those objects which are to be separated and is executed by at least one separator device.

The present invention also relates to an apparatus for destacking, or separating, sheet or panel-shaped, substantially planar objects such as sheet metal members which form a stack, comprising at least one separator device such as a screw or the like which presents to the stack a number of engagement members which, seen from the stack, are movable in a feeding direction in order, by engagement with the stack, to separate objects therefrom piecewise.

### BACKGROUND ART

In the production of various products of sheet metal by pressing, use is often made of sheet metal blanks which are piled into stacks in which the individual blanks lie directly on top of one another. The sheet metal blanks often carry an oil film, which entails that they show a manifest tendency to adhere to one another. On removal of the sheet metal blanks for further processing in a press or press line, use is made of different forms of gripping devices which, for example, may consist of suction cups which are applied to the uppermost sheet in the stack and which lift the sheet from the stack and move the sheet into the tool in the press.

If the sheets consist of magnetic material, the adhesive action of the oil film can be cancelled out by magnetic separators which prevent the suction cups from taking two or more sheets at the same time, which would cause immediate operational stoppage in the pressing operation.

If the sheets consist of non-magnetic material, for example aluminium, the technique employing magnetic separation will not function, for which reason adhesion between the sheet blanks implies almost constant operational stoppage.

In other technical fields of application in which separation of members or objects disposed in a stack has been brought into consideration, use has been made of screw-shaped separator devices which, with their threads, grip in between adjacent objects and lift out the uppermost object from the stack. In such instance, the axes of rotation of the screws are parallel with the edge of the stack, i.e. also parallel with a normal to the plane of that object or member which is to be separated.

This technique, known from the packaging industry, functions well only in such contexts where those portions of the objects which are grasped by the screws are spaced apart from one another such that the screw thread can pass into these gaps without damaging the objects. On the other hand, it is impossible to apply this technique successfully in such cases in which the objects or members form a compact stack which, thus displays no spacings between those portions of the objects which serve for engagement for the screws.

Nor can the technique known from the packaging industry be employed in such cases in which those objects which are to be separated do not lie in well-arranged stacks, such that individual objects may project out laterally beyond the rest of the stack. Precisely such poor precision in the stacks, i.e. individual sheets or groups of sheets projecting laterally out from the stack is difficult to avoid in the feeding of sheets to, for example, a press.

Despite the above-outlined problems in compact stacks and employing screws whose axes of rotation are parallel with the edge of the stack, Russian patent specification 870 322 discloses a solution which is based on this principle. In the design and construction according to this Russian patent publication, use is made of a screw whose thread has a sharp knife edge which projects out along a radius and which is intended to cut in between two adjacent sheets. Naturally, extremely strict requirements on precision are placed here if such an apparatus is to be capable of separating from one another metal sheets of the order of thickness of between 0,5 and 1,0 mm. Even one or a couple of tenths of a millimetre of incorrect placement of the cutting edge in relation to the stack will result in the sheets being damaged and deformed - with an imminent risk of operational stoppage. There is a risk of exactly the same outcome if the sheets in the stack suffer from edge damage resulting, for example, from impact. How great these precision problems can be is most readily apparent from the fact that the sheets under consideration here are a square metre or more in size and that the stack may weigh several tonnes. A similar solution is disclosed in SU-A-1680417.

### PROBLEM STRUCTURE

The present invention has for its object to realise a method the type mentioned by way of introduction, the method permitting a reliable and efficient separation of the metal sheets in a stack from one another so that only one sheet member is grasped at a time. The present invention further has for its object to realise a method which may be reduced into practice using simple and versatile means so that variations in sheet metal thickness and sheet dimensions - and also in the position of the individual sheets - may thereby readily be managed.

The present invention yet further has for its object to devise an apparatus of the type mentioned by way of introduction, the apparatus being of such a nature that it affords an extremely operationally reliable separation of the metal sheets from one another, that it is simple and economical to manufacture, and that it is versatile so that it may readily be used for sheets of varying thickness and otherwise varying dimensions and also for sheets whose position in the stack may vary. In addition, the present invention relates to an apparatus which affords an accurate positioning of the destacked sheet metal member when this is to be grasped by a gripping device for infeed into a subsequent processing machine.

### SOLUTION

The objects forming the basis of the present invention will be attained, in respect of the method, if the method is characterized in that an edge portion of the member or object which is to be separated is subjected, by the separator device, to a force which has a first component directed with and substantially parallel with the separation direction, and a second component substantially parallel with the plane of the object which is to be separated and directed from the separator device in towards the object.

The objects forming the basis of the present invention will be attained, in respect of the apparatus, if the apparatus is characterized in that the feeding direction makes an angle with the normal to that object which is to be separated; and that the separator device is in abutment against the stack at one edge of that object which is to be separated.

Further advantages will be attained according to the present invention, in respect of the method, if this is given one or more of the characterizing features as set forth in any one of appended Claims 2 to 4.

Further advantages will be attained according to the present invention, in respect of the apparatus, is this is also given one or more of the characterizing features as set forth in appended Claims 6 to 20.

### BRIEF DESCRIPTION OF THE ACCOMPANYING DRAWINGS

The present invention will now be described in greater detail hereinbelow, with particular reference to the accompanying Drawings. In the accompanying Drawings:
Fig. 1 schematically illustrates a vertical front elevation of a first embodiment of the present invention;
Fig. 2 is a top plan view of the embodiment of Fig. 1;
Fig. 3 is a perspective view of the embodiment according to Figs. 1 and 2;
Fig. 4 is a view corresponding to that of Fig. 1 of a second embodiment of the present invention;
Fig. 5 is a view corresponding to that of Fig. 1 of a third embodiment of the present invention;
Fig. 6 is a view corresponding to that of Fig. 1 of a fourth embodiment of the present invention;
Fig. 7 is a view corresponding to that of Fig. 1 of a fifth embodiment of the present invention; and
Fig. 8 is a view corresponding to that of Fig. 1 of a sixth embodiment of the present invention.

### DESCRIPTION OF PREFERRED EMBODIMENT

In its most generic form, the apparatus according to the present invention comprises at least one separator device 1 in abutment against an upper edge portion of that stack 2 of objects 3 which are to be separated from one another so that adhesion between the objects caused by oil film or other agents may thereby be canceled and the uppermost object in the stack can be grasped by a gripping device 4 for infeed into a processing machine, for example a press. The separator device 1 has at least one, possibly more, engagement members which, seen from the stack 2 in sequence after one another, move along a feeding direction 5 away from the stack. The intended separation or partitioning direction 6 is parallel with or substantially parallel with a normal to the plane of extent of the objects 3.

The feeding direction 5 makes an angle with the separation direction 6 and inclines inwardly and upwardly over the objects 3 and thereby subjects the objects to a force component substantially parallel with the separation direction 6 and a force component approximately parallel with the plane of extent of the objects 3, this second force component being directed away from the separator device in towards the stack 2 transversely of or substantially at right angles to that edge of the object 3 against which the separator device abuts. The separator device engages with an upper corner edge portion of the stack 2, i.e. with an edge of the uppermost object 3, and the feeding direction 5 can make an angle with the separation direction 6 of the order of magnitude of between 20 and 60°, preferably approx. 45°. This angle may vary during a separation cycle and be reduced from a relatively large starting value (60 - 40°) to a smaller final value (40-20°). The angle may also be constant.

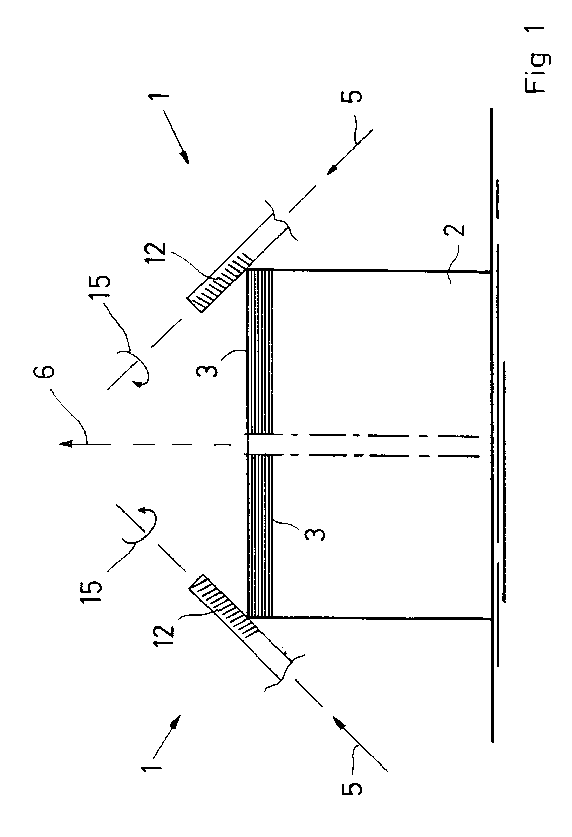

Fig. 1 shows two opposing separator devices 1, but, according to the present invention, it is sufficient in certain cases with but a single separator device if the opposingly located edge of the stack 2 in relation to the separator device is supported by a fixed arrest which prevents displacement of the objects 3 in this direction, i.e. in a direction away from the separator device.

In the alternative with the single separator device and an arrest, the separator device will, in the normal case, enter into engagement with the upper edge portion of the uppermost object 3 in the stack. This upper edge portion is subjected to a force, on the one hand, in the separation direction 6 and, on the other hand, in the plane of extent of the object so that this tends to be lifted and displaced into abutment against the arrest if such abutment does not already exist beforehand. As soon as the uppermost object has been stopped by the arrest, its edge in engagement with the separator device will be separated from the subjacent stack and be lifted away therefrom so that the adhesive action of the oil film is broken.

In order to permit the above-described movement, it is necessary that the separator device 1 can be pivoted away from the stack 2 to some extent or be displaced away from it in order thereby to avoid bending and deforming of the object 3.

If, for example, the next uppermost sheet in a stack 2 were to project out beyond the stack in a direction towards the separator device, the separator device will first come into engagement with this sheet. In such an event, the sheet will, on the one hand, be lifted from the stack in the separation direction 6 but will also be displaced in the plane of extent of the sheet as soon as the adhesive action of the oil film has been reduced or cancelled. In such instance, the sheet will be slid into contact against the arrest member, in which event the separator device will instead enter into engagement with the uppermost sheet in the stack, since the separator device inclines in a direction in over the stack. Thereafter, separation of the uppermost sheet continues in the manner described in the foregoing.

In the alternative with two opposing separator devices 1, engagement will be established in the normal case (no sheet projecting out laterally to any appreciable degree) approximately simultaneously between the separator devices 1 and opposing edges of the uppermost sheet 3, whereafter the opposing edges of the sheet are raised so that adhesion with the subjacent sheet is broken.

In such an alternative in which, for example, the next uppermost sheet projects out laterally, this will be grasped by the separator device located there. Approximately at the same time, the uppermost sheet will be grasped by the other separator device. As soon as the projecting sheet has been lifted by its separator device from the stack, it will be displaced laterally in under the uppermost sheet, for which reason engagement will be moved up to this sheet which is then lifted from the subjacent sheet.

In the embodiment illustrated in Figs. 1-3, use is made of two opposing separator devices 1 in the form of threaded worms or screws 12 which abut against the upper opposing corner edges of the stack 2. For reasons which will be elaborated upon below, the screws 12 are disposed for counter-rotation and, therefore, their threads are also of opposite turn.

The screws each have their drive unit 7 which comprises a gear 8 and a motor 9. The drive unit 7 is suspended in a bracket 10 which is pivotal about a shaft 11 so that thereby the screws may execute pivoting motions and thereby be distanced from one another according as an object 3 is led up along the screws. This pivoting entails that the angle between the separation direction 6 and the feeding direction 5 will gradually decrease as the separation and pivoting of the screws 12 continues.

The pivot shaft 11 is placed in such a manner in relation to the centre of gravity of the bracket 10, the drive unit 7 and the screw 12 that the screws strive to be pivoted in towards the stack 2 and abut against the stack. As a result, the screws will be pretensioned in a direction in towards the stack.

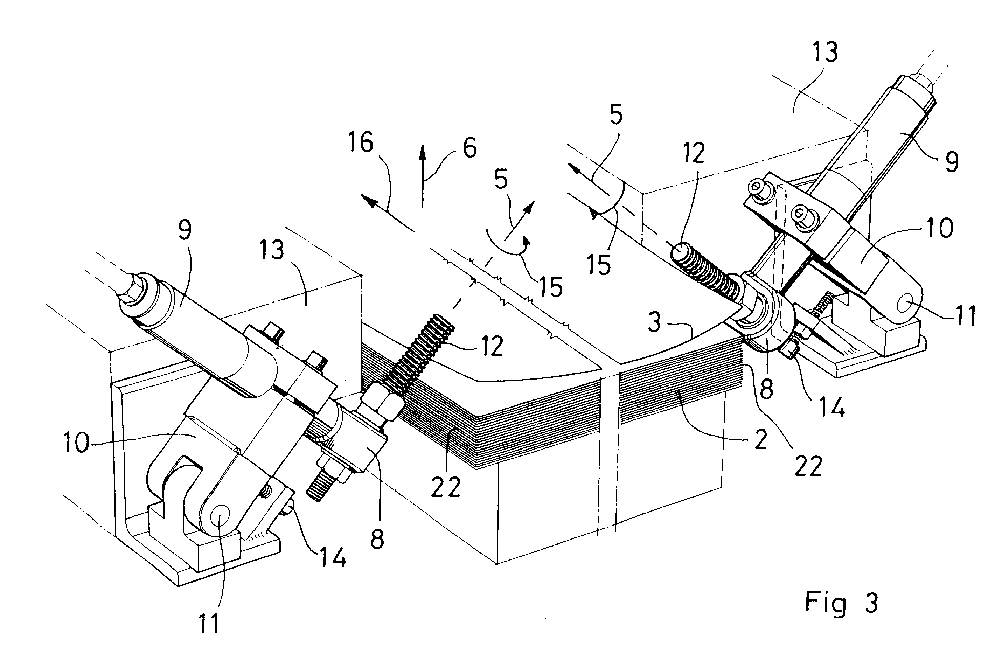

It will be apparent from Fig. 3 that the drive units 7 are secured via the shafts 11 to abutments 13 which are located closely adjacent the side edges 22 of the stack 2 against which the screws 12 abut. It will also be apparent that these abutments 13 are of such height as to extend up over the uppermost sheet 3 in the stack 2.

In order to function satisfactorily, the pitch of the screws 12 must approximate or preferably exceed the sheet thickness. At the same time, there is hardly any upper limit to the distance between two mutually subsequent engagement members or threads, but, for practical reasons, this distance should not substantially exceed twice the sheet thickness. Given that the subject matter of the present invention is intended to be usable in connection with varying thicknesses, it will be readily perceived that the screws 12 must be replaceably secured in the drive units 7, preferably the gears 8.

Practical experiments have demonstrated that the function of the apparatus will be satisfactory if the pitch of the screws 12 lies in the range of between 1.2 and 1.8 times the relevant sheet thickness. However, the pitch should preferably be about 1.5 times the sheet thickness and the thread profile should be symmetrical (ISO profile) with a slightly rounded thread crest, at least if the material in the sheets is soft, as is the case with aluminium.

It will be apparent from Fig. 3 that the pivoting of the drive units in towards the stack 2 may be governed with the aid of an adjustment screw 14 which is disposed on a foundation portion of the drive unit. In order to ensure satisfactory function while in operation, this adjustment screw should, however, not abut against the bracket but serve substantially so as to prevent exaggerated pivoting of the drive unit if the sheet stack were to be completely emptied.

It was mentioned above that the pivot shaft 11 is located such that the point of gravity realises a suitable pretensioning force between the screws 12 and the sheet stack 2. Naturally, such pretensioning may also be achieved by other forms of pretensioning devices, for example springs, pneumatic or hydraulic cylinders and the like.

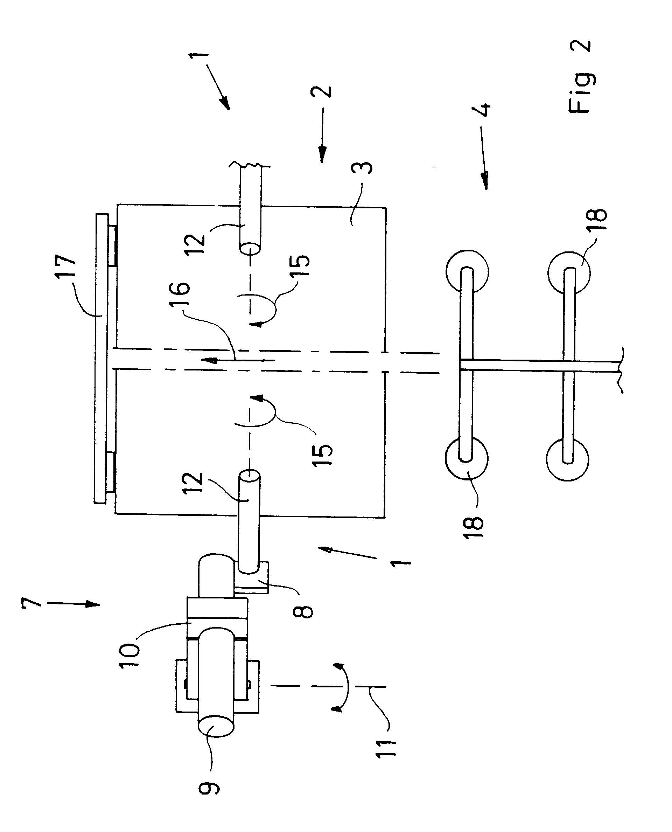

It was also mentioned above that the screws 12 should be counter-rotating, and be of opposite turn. In such instance, the directions of rotation should lie as shown in the Figure at the arrows 15. The reason for this is that those friction forces which occur between the screw periphery and the uppermost sheet 3 give a third force component against the sheet, this force component being located in the plane of extent of the sheet and being directed as shown by the arrow 16. When, thus, the uppermost sheet becomes free from the subjacent stack, the screws 12 strive to displace the sheet in the direction of the arrow 16. In order to prevent such displacement, use is made of an abutment 17 (Fig. 2) which guarantees accurate positioning of the uppermost sheet when this is to be grasped by the gripping device 4 which preferably is provided with suction cups 18.

By using the opposing abutments 13, it will be ensured that the sheet is located within the tolerance range which is indicated by the size difference between the sheet and the distance between the abutments 13. The striving on the part of the screws 12 to displace the sheet in a direction according to the arrow 16 towards the the abutment 17 further entails that the position of the sheet is very well defined also in this direction, for which reason the gripping devices 4 can deliver a sheet to a processing machine with a high level of precision.

As operation of the apparatus according to Figs. 1 to 3 continues, the height of the stack 2 will be reduced. This would entail that the drive units 7 were pivoted more and more towards one another in over the stack 2. In order to keep the angle between the intended separation direction 6 and the feeding directions 5 of the separator device 1 within permitted limits, either the stack 2 is raised by degrees as operation continues, or the drive units 7 and the screws 12 are lowered together with the abutments 13.

In order not to need modifying the range of movement of the gripping device 4, the alternative employing raising of the stack 2 is to be preferred so that thereby the upper face of the stack will constantly be at approximately the same level.

### DESCRIPTION OF ALTERNATIVE EMBODIMENTS

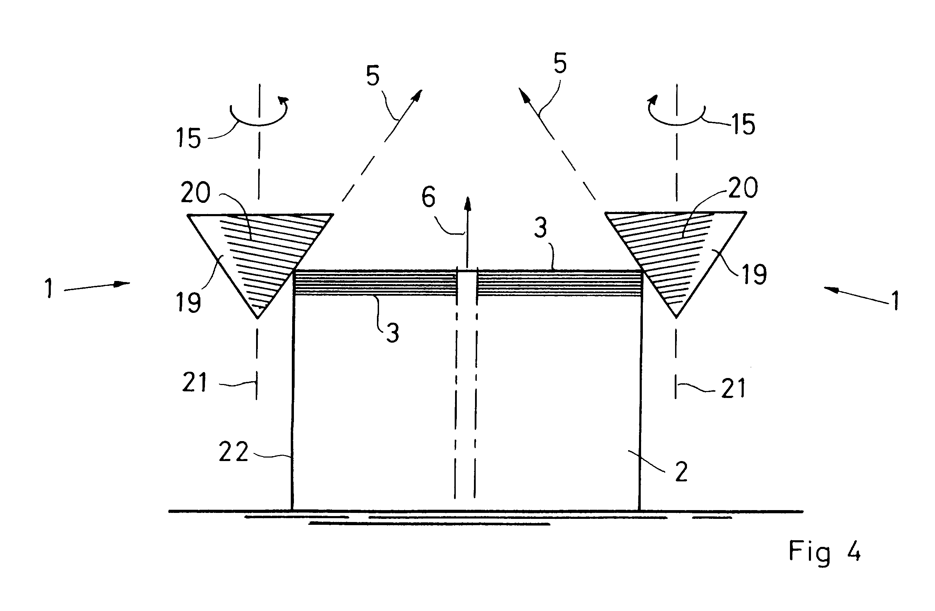

Fig. 4 shows one alternative embodiment in which the two above-disclosed screws have been replaced by one or more, preferably two rotary bodies 19. On their circumferential surface, the rotary bodies have a thread 20 which is analogous with the thread of the screws 12.

The configuration of the rotary bodies 19 may generally be described as a solid of revolution in which the axis of rotation 21 may be vertical and parallel with the side edge 22 of the stack. Depending upon the design of the solid of revolution, the axis of rotation 21 may, however, also slope more or less in the same manner as the axis of rotation of the screws 12, but also in the opposite direction.

The generatrix of the solid of revolution 19 may be a straight line, in which event the solid of revolution is in the form of a truncated or whole cone. However, the generatrix may also be an outwardly convex curve. In the alternative with a straight generatrix, the feeding direction 5 will be constant throughout the entire height of the solid of revolution. If, on the other hand, the generatrix is a curved line, the feeding direction 5 will vary along the height of the solid of revolution and, with the curve bent in the above-described manner, the angle between the feeding direction 5 and the separation direction 6 will decrease when the uppermost sheet 3 is transported upwards. In order to achieve this angular modification, the direction of the axis of rotation 21 may also be modified.

In order to prevent the two solids of revolution from crushing or powerfully deforming the sheet which is in motion upwards between them, the solids of revolution are movable in the horizontal plane towards and away from one another and are pretensioned at suitable force in a direction in towards the stack 2. This entails that, when the uppermost sheet migrates upwards, the distance between the axes of rotation 21 will increase in order rapidly once again to decrease when the uppermost sheet has arrived on the upper side of the solids of revolution or has been removed by the gripping device 4 so that thereby the threads 20 once again come into engagement with the stack.

As an alternative to the movement in the horizontal plane of the solids of revolution 19, the direction of their axes of rotation 21 may be modified so that the solids of revolution are inclined or pivoted outwards from one another when the sheet 3 migrates upwards.

Also in this embodiment, rotation of the solids of revolution 19 takes place in opposite directions as shown by means of the arrows 15. Also in this embodiment, use is suitably made of an abutment 17 for positioning the upper, destacked sheet 3.

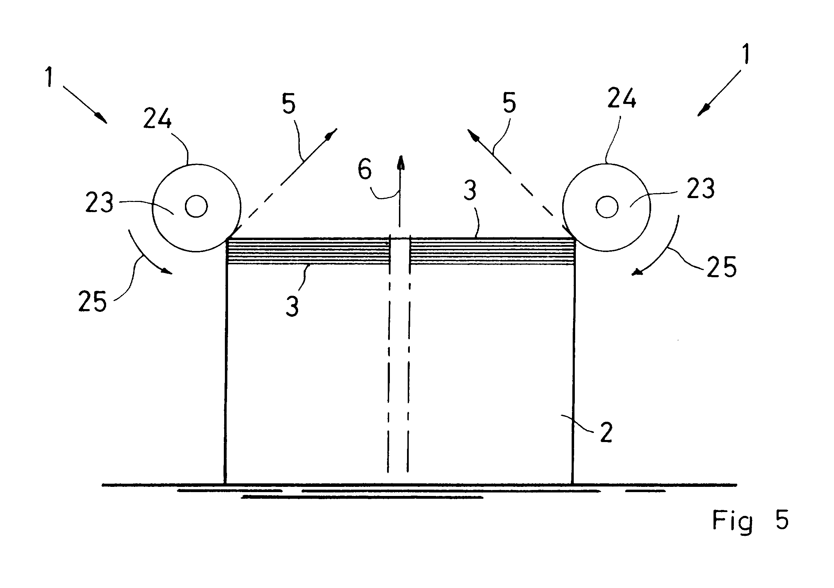

In the embodiment according to Fig. 5, the separator devices consist of one or more, preferably two wheels 23 or rotary disks which, with their periphery 24, abut against upper, preferably opposing edges of the stack 2. The wheels 23 carry a peripheral coating which gives a high friction in relation to the sheets 3 included in the stack, or also a grooved surface in which the distance between adjacent grooves corresponds to that described above for the threads of the screws 12. Furthermore, the longitudinal direction of the grooves is parallel with the edges of the sheets 3 included in the stack 2.

The wheels 23 rotate in opposite directions, which is intimated by the arrows 25. This entails that the feeding directions 5 will lie along the tangents of the wheels in the point of contact with that sheet which is to be destacked and separated. According as the sheet migrates upwards, the feeding directions will make a steadily decreasing angle with the separation direction 6 if the wheels are placed at a constant height above the stack 2. Also in this embodiment, it is necessary that the wheels 23 can move away from one another during a separation cycle, which may be achieved in that the journals of the wheels are movable horizontally (approximately in the plane of extent of the uppermost sheet 3). Alternatively, the journals of the wheels 23 may be suspended in pendulum arms so that the wheels may thereby be pivoted away in pendulum motion.

In this embodiment, the abutment 17 may be dispensed with, since the wheels 23 give no force component corresponding to the force component in the direction 16 in Fig. 2.

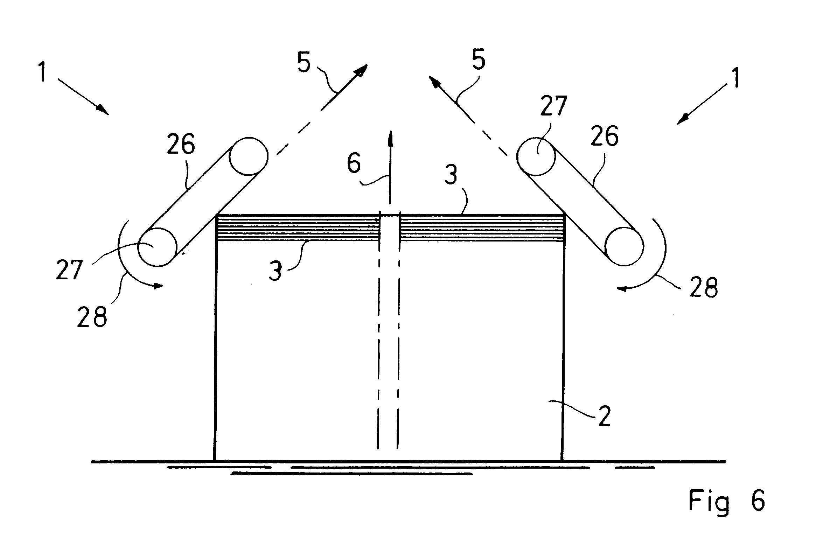

In the embodiment according to Fig. 6, the separator devices 1 consist of one or more, preferably two endless circulating belts 26. The belts run over rotary rollers or rolls 27 which rotate in accordance with the arrows 28 in opposite directions. Hereby, the belts 26 will have feeding directions 5 which correspond to the direction of those belt parts which abut against the stack. In the same manner as that which applied to the periphery of the wheels 23 in the embodiment according to Fig. 5, the belts 26 have grooves or friction-increasing coatings on their faces engaging with the stack, this transferring the force to the sheets.

Nor in this embodiment is there any need for a counterpart to the abutment 17, since the belts 26 do not give a force component in the plane of extent of the sheets along the direction 16 illustrated in Fig. 2.

In this embodiment, the angle between the feeding direction 5 and the intended separation direction 6 may be reduced during a separation cycle in that the assembly of belt/rollers is pivoted about the rotation axis of the lower roller 27 included in each assembly. Possibly, it is also conceivable that the assemblies are displaced in a horizontal direction away from one another in order to make requisite room for the destacked and separated sheet.

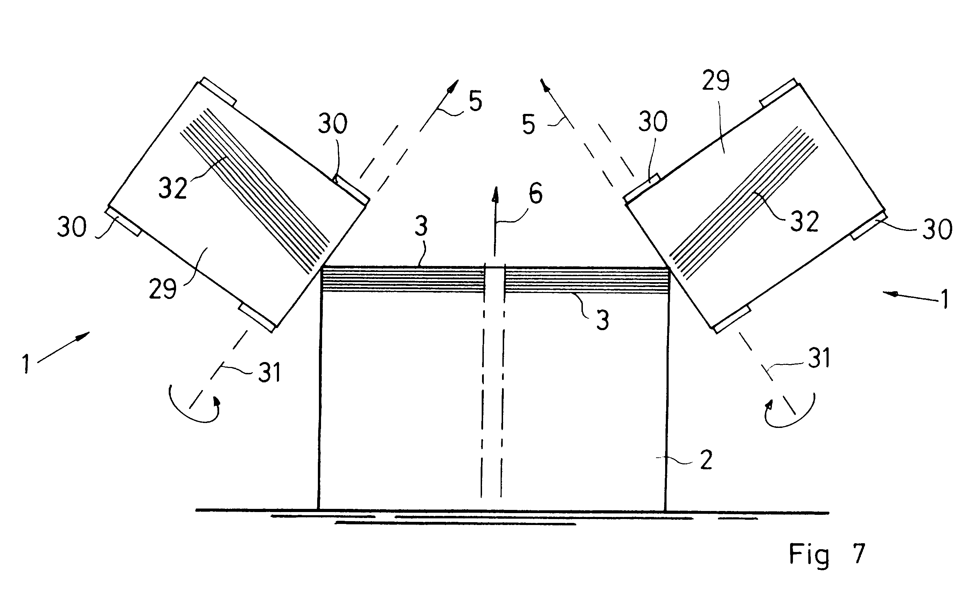

In the embodiment according to Fig. 7, the separator devices 1 consist of one or more, preferably two endless, circulating belts 29 which are supported and which turn about or between rollers 30. The rollers 30 in each separator device 1 have axes of rotation 31 which are parallel with one another and which are also parallel with the feeding directions 5 of the separator devices.

In order to achieve the sought-for destacking and separation of the sheets 3, the belts 29 are provided, on their outer faces abutting against the stack 2, with a grooving 32 in which the direction of the grooving is such that that part of the grooving which is "passed about" the roller 30 located in abutment with the stack 2 will form a thread on the surface of the roller. the grooving 32 thus has an angle of pitch in relation to a diameter plane to the rotating rollers 30. The distance between adjacent grooves corresponds to that disclosed for the thread of the screws 12 in the embodiment according to Figs. 1 - 3.

Also in this embodiment, the roller belts of the assembly must be movable in analogy with that described above.

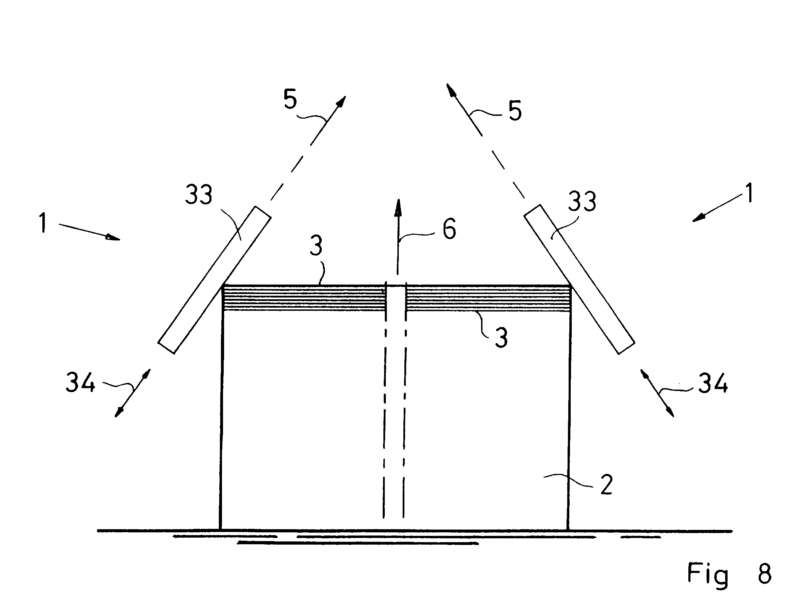

In the embodiment according to Fig. 8, the separator devices 1 consist of one or more, preferably two feeder devices 33 which are elongate and linearly reciprocal in accordance with the arrows 34. The feeder devices 33 are provided, on their sides facing the stack 2, with a transversely directed groove (parallel with the upper edge line of the stack), the distance between adjacent grooves corresponding to that mentioned above for the thread of the screws 12.

Superposed on the reciprocal movement according to the arrow 34 of the feeder device 33, there is also a pendulum pivotal motion, which implies that the upper ends of the feeder devices can be brought to a greater distance from one another so that thereby requisite room will be created for the sheet 3 being fed.

Further modifications are conceivable without departing from the scope of the appended Claims.

## Claims

1. A method of destacking, or separating, from one another sheet or panel-shaped, substantially planar objects (3) such as sheet metal members which form a stack (2), the separation being effected in a separation direction (6) which is substantially parallel with a normal to the plane of the objects (3) to be separated and said objects (3) are acted on by separator device (1) having engagement means and the separator device is yieldable pressed against an edge portion of the object to be separated, **characterized** in presenting a series of engagement means toward the object (3) to be separated and moving said series of engagement means in a feeder direction (5) forming an acute angel with the separation direction (6).

2. The method as claimed in claim 1, **characterized** in that the angle between the feeder direction (5) and the separation direction (6) is decreased as the object (3) is moved in the separation direction.

3. The method as claimed in claim 1 or 2, **characterized** in that the object (3) which is to be separated is displaced substantially parallel with its plane; and that it is brought into contact with a second separator device (1) having a series of engagement means and mowing said series of engagement means in a second feeder direction (5) forming an acute angle with the separation direction (6) substantially intersecting the first feeder direction.

4. The method as claimed in claim 3, **characterize**d in excerting, by means of the two separator devices (1), displacement forces against the object (3) to be separated, said displacement forces being substantially parallel with the longitudinal direction of edge lines of the object (3) against which the separators are yieldably pressed.

5. An apparatus for destacking, or separating, sheet or panel-shaped, substantially planar objects such as sheet metal members which form a stack, comprising at least one separator device, said separator device having engagement means and being yieldably pressed against an edge portion of an object to be separated for separating said object in a separation direction substantially normal to the plane of the object to be separated, **characterized** in that the separator device (1) has a series of engagement means and drive means for moving said series of engagement means in a feeder direction (5) forming an acute angel with the separation direction.

6. The apparatus as claimed in claim 5, **characterized** in that two separator devices (1) are provided, one at each of two opposing edge portions of the object (3) to be separated, the feeder directions (5) of the separator devices (1) forming substantially equal but counter-directed angles with the separation direction (6).

7. The apparatus as claimed in claim 5 or 6, **characterized** in that the distance between two adjacent engagement means as seen from the stack (2) is greater than the thickness of those objects (3) which are to be separated, preferably in the range of between 1.2 and 1.8 times said thickness.

8. The apparatus as claimed in claim 7, **characterized** in that said distance is approximately 1.5 times said thickness.

9. The apparatus as claimed in any one of claims 6 - 8, **characterized** in that the separator devices (1) are pivotal or displaceable such that their portions engaging with the object (3) to be separated are movable towards and away from one another.

10. The apparatus as claimed in any one of claims 5 - 8, **characterized** in that the separator devices (1) are replaceable for adaptation to the thickness of those objects (3) which are to be separated.

11. The apparatus as claimed in any one of claims 5 - 10, **characterized** in that the separator device/devices (1) and the stack (2) are adjustable in the vertical direction in relation to one another for adaptation of the relative height position according as the stack (2) is consumed.

12. The apparatus as claimed in any one of claims 5 - 12, **characterized** in that the separator device/devices (1) are substantially cylindrical screws (12).

13. The apparatus as claimed in claim 12, **characterized** in that the screws (12) are driven (7) in opposite directions, whereby that object (3) which is to be separated is subjected to a force (16) approximately in the plane of the object; and that an abutment (17) is provided so as to prevent displacement of the object in this direction.

14. The apparatus as claimed in claim 12 or 13, **characterized** in that the screws (12) are provided with drive means (7) which are pivotally disposed about shafts (11) which are substantially parallel with the edges of the stack (2) with which the screws (12) engage; and that the shafts (11) are disposed such a distance from the stack (2) that the units comprising screw/drive means (7) are pivoted by force of gravity to positions where the screws (12) engage with the stack (2).

15. The apparatus as claimed in any one of claims 5 - 12, **characterized** in that the separator device/ devices (1) are rotary, possibly conical solids of revolution (19), whose generatrix is straight or curved convexly outwards and whose circumferential surface has a thread (20) in engagement with the object (3) which is to be separated, the direction of a tangent to the solid of revolution in its region of contact with the object substantially corresponding to the feeder direction (5).

16. The apparatus as claimed in any one of claims 5 - 11, **characterized** in that the separator device/ devices (1) are wheels (23) whose peripheries (24) are in engagement with the object (3) which is to be separated, the direction of a tangent to the wheel in the region of contact with the object substantially corresponding to the feeder direction (5) and the wheel/wheels being rotary about shafts which are approximately parallel with those edges of the object (3) with which the wheels engage.

17. The apparatus as claimed in any one of claims 5 - 11, **characterized** in that the separator device/ devices are endless, circulating belts (26) in engagement with the object (3) which is to be separated, the direction of the belt in the region of contact with the object (3) substantially corresponding to the feeder direction (5), and wheels or rollers (27) carrying the belt/belts being rotary about shafts which are approximately parallel with those edges of the object (3) with which the belt engages.

18. The apparatus as claimed in any one of claims 5 - 11, **characterized** in that the separator device/ devices are endless, circulating belts (29) in engagement with the object (3) which is to be separated, the belt being disposed about two rollers (30) with parallel shafts (31), said shafts being also parallel with the feeder direction (5), and the belt (29) on its side in engagement with the object (3) having a groove (32) which has a pitch in relation to the diameter plane of the rollers.

19. The apparatus as claimed in any one of claims 5 - 11, **characterized** in that the separator device/ devices (1) are gear racks or similar grooved devices (33) movably disposed at least in their longitudinal direction, the direction of movement (34) during one separation cycle substantially corresponding to the feeding direction (5).

## Patentansprüche

1. Verfahren zum Abstapeln oder Trennen voneinander von bogen- oder plattenförmigen, im wesentlichen ebenen Objekten (3), wie beispielsweise einen Stapel (2) bildende Blechteile, wobei die Trennung in eine Trennrichtung (6) erfolgt, welche sich im wesentlichen parallel zu einer Senkrechten zur Ebene der zu trennenden Objekte (3) erstreckt, und auf die Objekte (3) eine Trenneinrichtung (1) einwirkt, welche Eingriffsmittel aufweist, und die Trenneinrichtung nachgiebig gegen einen Kantenabschnitt des zu trennenden Objekts gedrückt wird,
**dadurch gekennzeichnet,**
daß eine Reihe von Eingriffsmitteln auf das zu trennende Objekt (3) gerichtet wird und die Reihe von Eingriffsmitteln in eine Vorschubrichtung (5), welche einen spitzen Winkel mit der Trennrichtung (6) bildet, bewegt wird.

2. Verfahren nach Anspruch 1,
**dadurch gekennzeichnet,**
daß der Winkel zwischen der Vorschubrichtung (5) und der Trennrichtung (6) sich in dem Maße verringert, wie das Objekt (3) in Trennrichtung bewegt wird.

3. Verfahren nach Anspruch 1 oder 2,
**dadurch gekennzeichnet,**
daß das zu trennende Objekt (3) im wesentlichen parallel zu seiner Ebene verschoben wird; und daß es mit einer zweiten Trenneinrichtung (1) in Kontakt gebracht wird, welche eine Reihe von Eingriffsmitteln aufweist und die Reihe von Eingriffsmitteln in eine zweite Vorschubrichtung (5) bewegt, welche einen spitzen Winkel mit der Trennrichtung (6) bildet, wobei die erste Vorschubrichtung im wesentlichen geschnitten wird.

4. Verfahren nach Anspruch 3,
**gekennzeichnet durch**
das Ausüben von Verschiebekräften auf das zu trennende Objekt (3) mittels der zwei Trenneinrichtungen (3), wobei sich die Verschiebekräfte im wesentlichen parallel zu der Längsrichtung der Kantenlinien der Objekte (3) erstrecken, gegen die die Separatoren nachgiebig gedrückt werden.

5. Vorrichtung zum Abstapeln oder Trennen von bogen- oder plattenförmigen, im wesentlichen ebenen Objekten, wie beispielsweise einen Stapel bildende Blechteile, mit wenigstens einer Trenneinrichtung, wobei die Trenneinrichtung Eingriffsmittel aufweist und nachgiebig gegen einen Kantenabschnitt eines zu trennenden Objekts gedrückt wird, um das Objekt in eine Trennrichtung, welche sich im wesentlichen senkrecht zu der Ebene des zu trennenden Objekts erstreckt, zu trennen,
**dadurch gekennzeichnet,**
daß die Trenneinrichtung (1) eine Reihe von Eingriffsmitteln und Antriebsmitteln aufweist zum Bewegen der Reihe von Eingriffsmitteln in eine Vorschubrichtung (5), welche einen spitzen Winkel mit der Trennrichtung bildet.

6. Vorrichtung nach Anspruch 5,
**dadurch gekennzeichnet,**
daß zwei Trenneinrichtungen (1) jeweils auf einem von zwei entgegengesetzten Kantenabschnitten des zu trennenden Objekts (3) vorgesehen sind, wobei die Vorschubrichtungen (5) der Trenneinrichtungen (1) im wesentlichen gleiche Winkel mit der Trennrichtung (6) bilden, jedoch in entgegengesetzter Richtung.

7. Vorrichtung nach Anspruch 5 oder 6,
**dadurch gekennzeichnet,**
daß der Abstand zwischen zwei benachbarten Eingriffsmitteln vom Stapel (2) aus gesehen größer ist als die Dicke der zu trennenden Objekte (3) und vorzugsweise 1,2 bis 1,8 mal dieser Dicke beträgt.

8. Vorrichtung nach Anspruch 7,
**dadurch gekennzeichnet,**
daß der Abstand etwa 1,5 mal dieser Dicke beträgt.

9. Vorrichtung nach einem der Ansprüche 6 bis 8,
**dadurch gekennzeichnet,**
daß die Trenneinrichtungen (1) derart schwenkbar oder verschiebbar sind, daß deren Abschnitte, welche mit dem zu trennenden Objekt (3) in Eingriff stehen, zueinander und voneinander weg bewegbar sind.

10. Vorrichtung nach einem der Ansprüche 5 bis 8,
**dadurch gekennzeichnet,**
daß die Trenneinrichtungen (1) zwecks Anpassung an die Dicke der zu trennenden Objekte (3) austauschbar sind.

11. Vorrichtung nach einem der Ansprüche 5 bis 10,
**dadurch gekennzeichnet,**
daß die Trenneinrichtung/Trenneinrichtungen (1) und der Stapel (2) in senkrechter Richtung relativ zueinander einstellbar sind zwecks Anpassung der relativen Höhenposition entsprechend der Abnahme des Stapels (2).

12. Vorrichtung nach einem der Ansprüche 5 bis 11,
**dadurch gekennzeichnet,**
daß die Trenneinrichtung/Trenneinrichtungen (1) im wesentlichen zylindrische Schrauben (12) sind.

13. Vorrichtung nach Anspruch 12,
**dadurch gekennzeichnet,**
daß der Antrieb (7) der Schrauben (12) in entgegengesetzte Richtungen erfolgt, wodurch eine Kraft (16) auf das zu trennende Objekt (3) etwa in der Ebene des Objekts ausgeübt wird; und daß ein Widerlager (17) vorgesehen ist, um eine Verschiebung des Objekts in diese Richtung zu verhindern.

14. Vorrichtung nach Anspruch 12 oder 13,
**dadurch gekennzeichnet,**
daß die Schrauben (12) mit Antriebsmitteln (7) versehen sind, welche um Wellen (11) schwenkbar angeordnet sind, die sich im wesentlichen parallel zu den Kanten des Stapels (2), mit denen die Schrauben (12) in Eingriff stehen, erstrecken; und daß die Wellen (11) derart von dem Stapel (2) beabstandet angeordnet sind, daß die Einheiten, welche Schraube/Antriebsmittel (7) umfassen, durch die Schwerkraft in Positionen geschwenkt werden, in denen die Schrauben (12) in Eingriff mit dem Stapel (2) gelangen.

15. Vorrichtung nach einem der Ansprüche 5 bis 12,
**dadurch gekennzeichnet,**
daß die Trenneinrichtung/Trenneinrichtungen (1) drehbare, möglicherweise konische Rotationskörper (19) sind, deren Erzeugende sich gerade oder konvex nach außen gekrümmt erstreckt und deren Umfangsfläche ein Gewinde (20) aufweist, welches in Eingriff mit dem zu trennenden Objekt (3) steht, wobei die Richtung einer Tangente zu dem Rotationskörper im Berührungsbereich mit dem Objekt im wesentlichen der Vorschubrichtung (5) entspricht.

16. Vorrichtung nach einem der Ansprüche 5 bis 11,
**dadurch gekennzeichnet,**
daß die Trenneinrichtung/Trenneinrichtungen (1) Räder (23) sind, deren Außenflächen (24) mit dem zu trennenden Objekt (3) in Eingriff stehen, wobei die Richtung einer Tangente zu dem Rad im Berührungsbereich mit dem Objekt im wesentlichen der Vorschubrichtung (5) entspricht und das Rad/die Räder um Wellen drehbar sind, welche sich etwa parallel zu den Kanten des Objektes (3) erstrecken, mit denen die Räder in Eingriff stehen.

17. Vorrichtung nach einem der Ansprüche 5 bis 11,
**dadurch gekennzeichnet,**
daß die Trenneinrichtung/Trenneinrichtungen (1) endlose umlaufende Gurte (26) sind, welche in Eingriff mit dem zu trennenden Objekt (3) stehen, wobei die Richtung des Gurtes im Berührungsbereich mit dem Objekt (3) im wesentlichen der Vorschubrichtung (5) entspricht und die den Gurt/die Gurte tragenden Räder oder Walzen (27) um Wellen drehbar sind, welche sich etwa parallel zu den Kanten des Objekts (3) erstrecken, mit denen der Gurt in Eingriff steht.

18. Vorrichtung nach einem der Ansprüche 5 bis 11,
**dadurch gekennzeichnet,**
daß die Trenneinrichtung/Trenneinrichtungen endlose umlaufende Gurte (29) sind, welche in Eingriff mit dem zu trennenden Objekt (3) stehen, wobei der Gurt um zwei Walzen (30) mit parallelen Wellen (31) angeordnet ist, wobei die Wellen sich ebenfalls parallel zu der Vorschubrichtung (5) erstrecken und der Gurt (29) an der Seite, welche in Eingriff mit dem Objekt (3) steht, eine Vertiefung (32) aufweist, deren Neigung in Beziehung zu der Durchmesserebene der Walzen steht.

19. Vorrichtung nach einem der Ansprüche 5 bis 11,
**dadurch gekennzeichnet,**
daß die Trenneinrichtung/Trenneinrichtungen (1) Zahnstangen oder in ähnlicher Weise mit Vertiefungen versehenen Einrichtungen (33) sind, welche zumindest in ihrer Längsrichtung bewegbar vorgesehen sind, wobei die Bewegungsrichtung (34) während eines Trennzyklus im wesentlichen der Vorschubrichtung (5) entspricht.

## Revendications

1. Procédé de désempilage, ou de séparation, les uns par rapport aux autres, d'objets (3) sensiblement plans et en forme de feuille ou de panneau, tels que des pièces métalliques en tôle, qui forment une pile (2), la séparation étant effectuée dans une direction de séparation (6) qui est sensiblement parallèle a une normale au plan des objets (3) à séparer, un dispositif séparateur (1) comportant un moyen de venue en prise agissant sur lesdits objets (3) et le dispositif séparateur étant appliqué élastiquement sous pression en appui sur une partie de bord de l'objet à séparer, caractérisé par la présentation d'une série de moyens de venue en prise vers l'objet (3) à séparer et le déplacement de ladite série de moyens de venue en prise dans une direction d'avance (5) faisant un angle aigu avec la direction de séparation (6).

2. Procédé selon la revendication 1, caractérisé en ce que l'angle entre la direction d'avance (5) et la direction de séparation (6) diminue au fur et à mesure que l'objet (3) est déplacé dans la direction de séparation.

3. Procédé tel que revendiqué à la revendication 1 ou 2, caractérisé en ce que l'objet (3) qui doit être séparé est déplacé sensiblement parallèlement à son plan ; et en ce qu'il est amené en contact avec un second dispositif séparateur (1) comportant une série de moyens de venue en prise et déplaçant ladite série de moyens de venue en prise dans une seconde direction d'avance (5) faisant un angle aigu avec la direction de séparation (6) et recoupant sensiblement la première direction d'avance.

4. Procédé selon la revendication 3, caractérisé par l'exercice, au moyen des deux dispositifs séparateurs (1), de forces de déplacement sur l'objet (3) à séparer, lesdites forces de déplacement étant sensiblement parallèles à la direction longitudinale des lignes de bord de l'objet (3) en appui sur lesquelles les séparateurs sont appliqués élastiquement sous pression.

5. Appareil pour désempiler, ou séparer, des objets sensiblement plans et en forme de feuille ou de panneau, tels que des pièces métalliques en tôle, qui forment une pile, comprenant au moins un dispositif séparateur, ledit dispositif séparateur comportant un moyen de venue en prise et étant appliqué élastiquement sous pression en appui sur une partie de bord d'un objet à séparer, en vue de séparer ledit objet dans une direction de séparation sensiblement normale au plan de l'objet à séparer, caractérisé en ce que le dispositif séparateur (1) comporte une série de moyens de venue en prise et des moyens d'entraînement servant à déplacer ladite série de moyens de venue en prise dans une direction d'avance (5) faisant un angle aigu avec la direction de séparation.

6. Appareil selon la revendication 5, caractérisé en ce que qu'il est prévu deux dispositifs séparateurs (1) disposés respectivement à l'endroit de chacune de deux parties de bord opposées de l'objet (3) à séparer, les directions d'avance (5) des dispositifs séparateurs (1) formant des angles sensiblement égaux, mais de sens opposés, avec la direction de séparation (6).

7. Appareil selon la revendication 5 ou 6, caractérisé en ce que la distance entre deux moyens de venue en prise adjacents, vue à partir de la pile (2), est supérieure à l'épaisseur de ces objets (3) qui sont à séparer, de préférence dans la plage comprise entre 1,2 et 1,8 fois ladite épaisseur.

8. Appareil tel que revendiqué à la revendication 7, caractérisé en ce que ladite distance vaut approximativement 1,5 fois ladite épaisseur.

9. Appareil tel que revendiqué à l'une quelconque des revendications 6 - 8, caractérisé en ce que les dispositifs séparateurs (1) sont montés basculants ou déplaçables de façon telle que leurs parties venant en prise sur l'objet (3) à séparer peuvent être rapprochées et éloignées l'une de l'autre.

10. Appareil selon l'une quelconque des revendications 5 - 8, caractérisé en ce que les dispositifs séparateurs (1) sont remplaçables en vue d'une adaptation à l'épaisseur des objets (3) qui doivent être séparés.

11. Appareil selon l'une quelconque des revendications 5 - 10, caractérisé en ce que le dispositif/les dispositifs séparateurs (1) et la pile (2) sont réglables suivant la direction verticale l'un/les uns par rapport à l'autre en vue d'une adaptation de la position relative en hauteur en fonction de la vitesse à laquelle la pile (2) est utilisée.

12. Appareil selon l'une quelconque des revendications 5 - 12, caractérisé en ce que le dispositif/les dispositifs séparateurs (1) sont des vis (12) sensiblement cylindriques.

13. Appareil selon la revendication 12, caractérisé en ce que les vis (12) sont entraînées (7) dans des sens opposés, de sorte qu'un objet (3) qui doit être séparé est soumis à une force (16) approximativement dans le plan de l'objet ; et en ce qu'une butée (17) est prévue de façon à empêcher un déplacement de l'objet suivant cette direction.

14. Appareil selon la revendication 12 ou 13, caractérisé en ce que les vis (12) sont pourvues de moyens d'entraînement (7) qui sont disposés d'une manière basculante autour d'arbres (11) qui sont sensiblement parallèles aux bords de la pile (2) en prise sur lesquels les vis (12) viennent ; et en ce que les arbres (11) sont disposés à une distance de la pile (2) telle que les unités comprenant les vis/moyens d'entraînement (7) basculent sous l'effet de leur propre poids jusqu'en des positions dans lesquelles les vis (12) viennent en prise sur la pile (2).

15. Appareil selon l'une quelconque des revendications 5 - 12, caractérisé en ce que le dispositif/les dispositifs séparateurs (1) sont des solides de révolution (19) montés rotatifs, éventuellement coniques, dont la génératrice est rectiligne ou à courbure convexe vers l'extérieur et dont la surface périphérique présente un filetage (20) venant en prise sur l'objet (3) qui doit être séparé, la direction d'une tangente au solide de révolution dans sa zone de contact avec l'objet correspondant sensiblement à la direction d'avance (5).

16. Appareil selon l'une quelconque des revendications 5 - 11, caractérisé en ce que le dispositif/les dispositifs séparateurs (1) sont des roues (23) dont les périphéries (24) viennent en prise sur l'objet (3) qui doit être séparé, la direction d'une tangente à la roue dans la zone de contact avec l'objet correspondant sensiblement à la direction d'avance (5) et la roue/les roues étant montées rotatives autour d'arbres qui sont approximativement parallèles aux bords de l'objet (3) en prise sur lesquels les roues viennent.

17. Appareil selon l'une quelconque des revendications 5 - 11, caractérisé en ce que le dispositif/les dispositifs séparateurs sont des courroies sans fin (26) à mouvement sans fin venant en prise sur l'objet (3) qui doit être séparé, la direction de la courroie dans la zone de contact avec l'objet (3) correspondant sensiblement à la direction d'avance (5), et des roues ou rouleaux (27) portant la courroie/les courroies étant montés rotatifs autour d'arbres qui sont approximativement parallèles aux bords de l'objet (3) en prise sur lesquels la courroie vient.

18. Appareil selon l'une quelconque des revendications 5 - 11, caractérisé en ce que le dispositif/les dispositifs séparateurs sont des courroies sans fin (29) à mouvement sans fin venant en prise sur l'objet (3) qui doit être séparé, la courroie étant disposée autour de deux rouleaux (30) comportant des arbres (31) parallèles, lesdits arbres étant aussi parallèles à la direction d'avance (5) et la courroie (29) présentant, sur sa face venant en prise sur l'objet (3), une gorge (32) qui a un certain pas par rapport au plan diamétral des rouleaux.

19. Appareil selon l'une quelconque des revendications 5 - 11, caractérisé en ce que le dispositif/les dispositifs séparateurs (1) sont des crémaillères ou dispositifs analogues à entredents (33) disposés d'une manière mobile au moins suivant leur direction longitudinale, la direction de déplacement (34) pendant un cycle de séparation correspondant sensiblement à la direction d'avance (5).
